# EUROPEAN PATENT APPLICATION

(11) **EP 4 618 224 A1**
(43) Date of publication of application: **17.09.2025**
(21) Application number: 23924693.7
(22) Date of filing: 02.03.2023
(51) Int. Cl.: H01M 10/0568

(54) **BATTERY CELL, BATTERY AND ELECTRICAL DEVICE**

(71) Applicant: Contemporary Amperex Technology (Hong Kong) Limited, Hong Kong (HK)
(72) Inventor: WU, Zeli, Ningde, Fujian 352100 (CN); WU, Qiao, Ningde, Fujian 352100 (CN); GUO, Jie, Ningde, Fujian 352100 (CN); HAN, Changlong, Ningde, Fujian 352100 (CN); HUANG, Lei, Ningde, Fujian 352100 (CN); ZHANG, Cuiping, Ningde, Fujian 352100 (CN)
(74) Representative: Gong, Jinping
(86) International application number: PCT/CN2023/079370
(87) International publication number: WO 2024/178726

(57) **Abstract**

Embodiments of this application provide a battery cell, a battery, and a power consuming device. The battery cell includes: an electrode assembly, where the electrode assembly includes a positive electrode plate and a negative electrode plate; and an electrolyte solution, where the electrolyte solution includes a first electrolyte salt, and a molecular formula of the first electrolyte salt is: 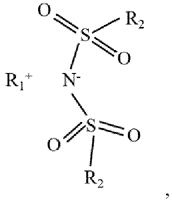 where R₁ is one of Li, Na, K, Mg, and Al, R₂ is at least one of element O, element S, element F, and C1-C3 alkyl or C1-C3 alkyl substituted with element F, and based on 100 parts by weight of the electrolyte solution, content W₁ of the first electrolyte salt ranges from 2 parts by weight to 20 parts by weight. According to the technical solution of this application, energy density and safety performance of the battery can be improved.

## Description

### TECHNICAL FIELD

This application relates to the field of battery technologies, and in particular, to a battery cell, a battery, and a power consuming apparatus.

### BACKGROUND

In recent years, lithium-ion batteries have been used in increasingly wide fields, for example, energy storage power supply fields such as wind power stations, water power stations, thermal power stations, and solar power stations, and a variety of fields such as electric bicycles, electric motorcycles, electric vehicles, military equipment, and aerospace. In addition to great development of the lithium-ion battery, higher requirements have also been put forward for energy density, cycle performance, safety performance, and the like of the lithium-ion battery.

Therefore, how to make the lithium-ion battery have both energy density and safety performance is a problem to be urgently resolved.

### SUMMARY

This application has been made in view of the foregoing topics. An objective of this application is to provide a battery cell, a battery, and a power consuming apparatus, where energy density and safety performance of the battery cell are improved.

A first aspect of this application provides a battery cell, including: an electrode assembly, where the electrode assembly includes a positive electrode plate and a negative electrode plate; and an electrolyte solution, where the electrolyte solution includes a first electrolyte salt, and a molecular formula of the first electrolyte salt is: 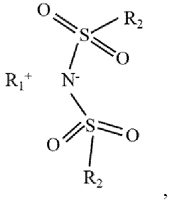 where R₁ includes one of Li, Na, K, Mg, and Al, R₂ includes at least one of element O, element S, element F, and C1-C3 alkyl or C1-C3 alkyl substituted with element F, and based on 100 parts by weight of the electrolyte solution, content W₁ of the first electrolyte salt ranges from 2 parts by weight to 20 parts by weight.

In embodiments of this application, the battery cell includes the electrode assembly and the electrolyte solution. Further, the electrode assembly includes the positive electrode plate and the negative electrode plate, the electrolyte solution contains the first electrolyte salt, and the molecular formula of the first electrolyte salt is 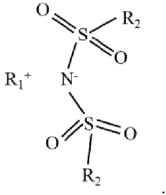 The first electrolyte salt is added to the electrolyte solution, the R₁ group in the molecular formula of the first electrolyte salt may be one of Li, Na, K, Mg, and Al, and the R₂ group may be at least one of element O, element S, element F, and C1-C3 alkyl or C1-C3 alkyl substituted with element F. The first electrolyte salt containing the R₂ group has relatively large ion dissociation energy, and more active R₁ ions can be dissociated, that is, R₁ ions are easily reduced. Therefore, the dissociated R₁ ions in a molecular structure of the first electrolyte salt are more likely to be the active R₁ ions, to contribute a partial capacity, so as to help to improve energy density of the battery. In addition, the first electrolyte salt containing the R₂ group has relatively high thermal stability, to help to improve overall heat resistance of the electrolyte solution, and further improve safety performance of the battery.

In a possible embodiment, the first electrolyte salt is lithium bis(fluorosulfonyl)imide.

In this embodiment of this application, to improve the energy density and the safety performance of the battery cell, the first electrolyte salt is added to the electrolyte solution, where the R₁ group in the first electrolyte salt may be one of Li, Na, K, Mg, and Al, and the R₂ group may be at least one of element O, element S, element F, and C1-C3 alkyl or C1-C3 alkyl substituted with element F. The R₁ group is Li, and the R₂ group is element F, that is, the first electrolyte salt is the lithium bis(fluorosulfonyl)imide. The lithium bis(fluorosulfonyl)imide is easy to obtain, and has relatively large ion dissociation energy and good heat resistance performance. In this way, the energy density and the safety performance of the battery can be improved, and the lithium bis(fluorosulfonyl)imide can be widely used in large-scale production.

In a possible embodiment, based on 100 parts by weight of the electrolyte solution, the content W₁ of the first electrolyte salt ranges from 10 parts by weight to 16 parts by weight.

In this embodiment of this application, because the first electrolyte salt has the relatively large ion dissociation energy, more active lithium ions that can contribute a capacity can be dissociated. In addition, the first electrolyte salt has the relatively high heat resistance and is added to the electrolyte solution, so that the overall heat resistance of the electrolyte solution can be improved. However, the first electrolyte salt also has some adverse effects, for example, causes corrosion on a current collector. If only the content of the first electrolyte salt in the electrolyte solution is increased, the current collector is eventually corroded. Consequently, the energy density and the safety performance of the battery cannot be improved, and the entire battery is open circuited. Therefore, the first electrolyte salt occupies 10% to 16% of total content of the electrolyte solution. This can not only maintain a normal function of the battery, but also enable the first electrolyte salt to exert a function, to improve the energy density and the safety performance of the battery.

In a possible embodiment, the negative electrode plate includes a negative electrode current collector and a negative electrode active material layer coated on at least one side of the negative electrode current collector; and the content W₁ of the first electrolyte salt and a thickness H₁ of the negative electrode current collector satisfy: 1 g·µm⁻¹≤W₁/H₁≤10 g µm⁻¹, and optionally satisfy: 1.4 g µm⁻¹≤W₁/H₁≤5.4 g µm⁻¹.

In this embodiment of this application, reducing the thickness of the negative electrode current collector helps to further improve the energy density of the battery. However, because the thickness of the negative electrode current collector is reduced, heat dissipation of the negative electrode current collector becomes poor, and internal resistance becomes large, finally resulting in poor safety performance and low power of the battery. Therefore, a ratio of parts by weight of the first electrolyte salt to the thickness of the negative electrode current collector is kept within 1 g µm to 10 g µm⁻¹, especially within 1. 4 g µm⁻¹ to 5.4 g µm⁻¹, and the ratio of the parts by weight of the first electrolyte salt to the thickness of the negative electrode current collector can be kept within a reasonable range, so that the energy density of the battery can be further improved based on the reasonable range; and the first electrolyte salt improves the heat resistance of the electrolyte solution, reduces heat generation of the battery, and compensates for a decrease in heat dissipation performance caused by a reduced thickness of the negative electrode current collector, to further improve the safety performance of the battery. In addition, the heat resistance of the electrolyte solution of the battery is improved, resistance of the battery is reduced, and the power of the battery is increased, so that the battery can have high energy density, high safety performance, and high power.

In a possible embodiment, compaction density P of the negative electrode active material and the content W₁ of the first electrolyte salt satisfy: 0.05 g² cm⁻³≤P/W₁≤0.5 g² cm⁻³, and optionally satisfy: 0.08 g² cm⁻³≤P/W₁≤0.17 g² cm⁻³.

In this embodiment of this application, the compaction density of the negative electrode active material coated on the negative electrode current collector is appropriately increased, so that the energy density of the battery can be improved. A ratio of the compaction density of the negative electrode active material to the parts by weight of the first electrolyte salt is kept within 0.05 g² cm⁻³ to 0.5 g² cm⁻³, especially within 0.08 g² cm⁻³ to 0.17 g² cm⁻³. This can effectively reduce a negative effect caused by the reduced thickness of the negative electrode current collector on the power and the safety performance of the battery, so that the battery cell has high energy density, high power performance, and high safety performance.

In a possible embodiment, the thickness H₁ of the negative electrode current collector ranges from 2 µm to 10 µm, and optionally ranges from 3 µm to 7 µm.

In this embodiment of this application, when the thickness of the negative electrode current collector is excessively large, that is, when the thickness is greater than 10 µm, the energy density of the battery is reduced. When the thickness of the negative electrode current collector is excessively small, that is, when the thickness is less than 2 µm, the safety performance and the power of the battery are reduced. The thickness of the negative electrode current collector is maintained within 2 µm to 10 µm, especially within 3 µm to 7 µm, so that the battery can have relatively high energy density, safety performance, and power performance.

In a possible embodiment, the compaction density P of the negative electrode active material ranges from 1 g cm⁻³ to 2 g cm⁻³, and optionally ranges from 1.4 g cm⁻³ to 1.7 g cm⁻³.

In this embodiment of this application, when the compaction density of the negative electrode active material is excessively high, that is, when the compaction density is greater than 2 g/cm³, the internal resistance of the battery is increased, and the power of the battery is reduced. When the compaction density of the negative electrode active material is excessively low, that is, when the compaction density is less than 1 g·cm⁻³, the energy density of the battery is excessively low. The compaction density of the negative electrode active material is maintained within 1 g·cm⁻³ to 2 g·cm⁻³, especially within 1.4 g·cm⁻³ to 1.7 g·cm⁻³, so that the battery can have relatively high energy density, safety performance, and power performance.

In a possible embodiment, the electrolyte solution further includes a second electrolyte salt, and the second electrolyte salt is lithium hexafluorophosphate.

In this embodiment of this application, to improve the energy density and the safety performance of the battery, the first electrolyte salt is added to the electrolyte solution. Specifically, the first electrolyte salt may be a lithium bis(fluorosulfonyl)imide salt. However, the first electrolyte salt corrodes a positive electrode current collector. Therefore, a component that can inhibit corrosion of the first electrolyte salt needs to be added to the electrolyte solution. The second electrolyte salt, namely, the lithium hexafluorophosphate, is added to the electrolyte solution, so that corrosion on the positive electrode current collector can be inhibited, and a side effect of the first electrolyte salt can be reduced.

In a possible embodiment, based on 100 parts by weight of the electrolyte solution, content W₂ of the second electrolyte salt ranges from 1 part by weight to 15 parts by weight, and optionally ranges from 2 parts by weight to 10 parts by weight.

In this embodiment of this application, to inhibit a corrosive effect of the first electrolyte salt on the positive electrode current collector, the second electrolyte salt is added to the electrolyte solution. However, if a proportion occupied by the second electrolyte salt in the electrolyte solution is excessively high, because the lithium hexafluorophosphate has relatively poor thermal stability and is easily hydrolyzed, cycle performance of the battery is reduced and a capacity is rapidly faded. If the proportion occupied by the second electrolyte salt in the electrolyte solution is excessively low, an effect of inhibiting the first electrolyte salt by the second electrolyte salt is not obvious. The content of the second electrolyte salt in the electrolyte solution is maintained within 1% to 15%, especially within 2% to 10%, so that the cycle performance and the capacity of the battery can be maintained normal, and the corrosion on the positive electrode current collector can be avoided.

In a possible embodiment, the positive electrode plate includes a positive electrode current collector and a positive electrode active material layer coated on at least one side of the positive electrode current collector; and the content W₁ of the first electrolyte salt, the content W₂ of the second electrolyte, and a thickness H₂ of the positive electrode current collector satisfy: 0.05 µm⁻¹≤W₁/(W₂×H₂)≤1 µm⁻¹, and optionally satisfy: 0.07 µm⁻¹≤ W₁/(W₂×H₂)≤0.6 µm⁻¹.

In this embodiment of this application, to inhibit the corrosive effect of the first electrolyte salt on the positive electrode current collector, the second electrolyte salt is added to the electrolyte solution. A strength of corrosion on the positive electrode current collector can be directly determined by using a ratio of the parts by weight of the first electrolyte salt to parts by weight of the second electrolyte salt and the thickness of the positive electrode current collector. A range of the ratio is kept within 0.05 µm⁻¹ to 1 µm⁻¹, especially within 0.07 µm⁻¹ to 0.6 µm⁻¹, so that the first electrolyte salt can help to improve the energy density and the safety performance of the battery, and deterioration of overall performance of the battery due to the corrosion on the positive electrode current collector caused by addition of the first electrolyte salt can be avoided.

In a possible embodiment, the thickness H₂ of the positive electrode current collector ranges from 5 µm to 20 µm, and optionally ranges from 8 µm to 15 µm.

In this embodiment of this application, the thickness of the positive electrode current collector is maintained within 5 µm to 20 µm, especially within 8 µm to 15 µm, so that a corrosion hazard caused by the first electrolyte salt on the positive electrode current collector can be reduced, and the energy density of the battery cannot be reduced.

In a possible embodiment, the electrolyte solution further includes fluoroethylene carbonate.

In this embodiment of this application, to improve the energy density and the safety performance of the battery, the first electrolyte salt is added to the electrolyte solution. However, the first electrolyte salt reacts violently with LiC₆ generated during cycling in the battery, and explosion may further occur. The fluoroethylene carbonate is added to the electrolyte solution, the reaction between the first electrolyte salt and LiC₆ can be inhibited, thereby further improving the safety performance of the battery.

In a possible embodiment, content W₃ of the fluoroethylene carbonate and the content W₁ of the first electrolyte salt satisfy: 0.1≤W₃/W₁≤0.5, and optionally satisfy: 0.12≤W₃/W₁≤0.3.

In this embodiment of this application, to avoid the reaction between the first electrolyte salt and LiC₆, the fluoroethylene carbonate is added to the electrolyte solution. However, when the content of the fluoroethylene carbonate is excessively high, stability of the electrolyte solution at high temperature becomes poor. When the content is excessively low, a good inhibitation effect cannot be achieved. A ratio of the content of the fluoroethylene carbonate to the content of the first electrolyte salt is set to within 0.1 to 0.5, especially within 0.12 to 0.3, so that the reaction between the first electrolyte salt and LiC₆ can be avoided, a function of the first electrolyte salt can be exerted, and the stability of the electrolyte solution at high temperature cannot be affected.

In a possible embodiment, based on 100 parts by weight of the electrolyte solution, the content W₃ of the fluoroethylene carbonate ranges from 2 parts by weight to 10 parts by weight, and optionally ranges from 2 parts by weight to 5 parts by weight.

In this embodiment of this application, a proportion of the fluoroethylene carbonate in the electrolyte solution is maintained within 2% to 10%, especially within 2% to 5%, so that instability of the electrolyte solution due to addition of excessive fluoroethylene carbonates can be avoided, and the reaction between the first electrolyte salt and LiC₆ can be avoided, thereby improving the safety performance of the battery.

In a possible embodiment, the positive electrode active material includes a lithium transition metal composite oxide, and the lithium transition metal composite oxide includes at least one of a lithium cobalt oxide, a lithium nickel oxide, a lithium manganese oxide, a lithium nickel manganese oxide, and a lithium nickel cobalt aluminum oxide.

In this embodiment of this application, when the lithium transition metal composite oxide including at least one of the lithium cobalt oxide, the lithium nickel oxide, the lithium manganese oxide, the lithium nickel manganese oxide, and the lithium nickel cobalt aluminum oxide is used as the positive electrode active material of the battery, the lithium transition metal composite oxide has a low price, environment friendliness, excellent thermal stability, and a relatively high specific capacity.

In a possible embodiment, the negative electrode active material includes at least one of hard carbon, graphite, and a carbon fiber, and optionally is graphite.

In this embodiment of this application, the negative electrode material is at least one of hard carbon, graphite, and the carbon fiber, especially graphite, and it can be ensured that lithium ions are freely intercalated and deintercalated, thereby maintaining normal migration of the lithium ions.

A second aspect of this application provides a battery, including the battery cell according to any one of the embodiments in the first aspect of this application.

A third aspect of this application provides a power consuming apparatus, including the battery cell according to any one of the embodiments in the first aspect of this application or the battery according to the second aspect.

### BRIEF DESCRIPTION OF THE DRAWINGS

In order to explain the technical solutions of the embodiments of this application more clearly, the accompanying drawings needed for the embodiments of this application will be briefly described below. The accompanying drawings described below are only some embodiments of this application. A person skilled in the art can obtain other accompanying drawings based on the accompanying drawings without a creative work.
FIG. 1 is a schematic structural diagram of a battery cell according to an embodiment of this application.
FIG. 2 is a schematic structural diagram of an electrode assembly according to an embodiment of this application.
FIG. 3 is a schematic diagram of a battery cell according to an embodiment of this application.
FIG. 4 is a schematic diagram of a battery according to an embodiment of this application.
FIG. 5 is a schematic structural diagram of a battery according to another embodiment of this application.
FIG. 6 is a schematic structural diagram of a power consuming apparatus according to an embodiment of this application.

### DETAILED DESCRIPTION

Hereinafter, embodiments of an electrode assembly, a battery cell, a battery, and a power consuming apparatus of this application are appropriately described in detail with reference to the accompanying drawings, but there may be cases where unnecessary detailed descriptions are omitted. For example, there are cases where detailed descriptions of well-known matters are omitted and repeated descriptions of actually identical structures are actually provided. In addition, the accompanying drawings and the following descriptions are provided for a person skilled in the art to fully understand this application and are not intended to limit the subject matter recorded in the claims.

A "range" disclosed in this application is defined in a form of a lower limit and an upper limit, a given range is defined by selecting a lower limit and an upper limit, and the selected lower limit and upper limit define boundaries of a particular range. A range defined in this way may be inclusive or exclusive of end values, and may be arbitrarily combined, that is, any lower limit may be combined with any upper limit to form a range. For example, if a range of 60 to 120 and a range of 80 to 110 are listed for a specific parameter, it is understood that a range of 60 to 110 and a range of 80 to 120 are also contemplated. In addition, if minimum range values of 1 and 2 are listed and maximum range values of 3, 4, and 5 are listed, the following ranges may all be contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a and b, where a and b are both real numbers. For example, a numerical range "0 to 5" indicates that all real numbers between "0 to 5" have been listed in this specification, and "0 to 5" is only an abbreviated representation of a combination of these numerical values. In addition, when a parameter is expressed as an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined to form a new technical solution.

Unless otherwise specified, all technical features and optional technical features of this application may be combined to form a new technical solution.

Unless otherwise specified, all steps of this application may be performed sequentially or randomly, and optionally, are performed sequentially. For example, the phrase "the method includes step (a) and step (b)" indicates that the method may include step (a) and step (b) performed sequentially, or the method may include step (b) and step (a) performed sequentially. For example, the phrase "the method may further include step (c)" indicates that step (c) may be added to the method in any order. For example, the method may include step (a), step (b), and step (c), may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may indicate that other components not listed may be further included or comprised, or only the listed components may be included or comprised.

The term such as "above", "below", "greater than", or "less than" used in this application includes the number itself. For example, "at least one" means one or more, and "at least one of A and B" means "A", "B", or "A and B".

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

Lithium batteries are widely used in consumer electronic products due to their advantages such as relatively high energy density, relatively high power, and relatively long cycle life. In recent years, with the continuous development of electric vehicles and energy storage systems, people's requirements for energy density of a battery are also increasing. Therefore, it is particularly important to develop a large-scale energy storage system with high energy density, safety, and reliability.

For a negative electrode current collector of a lithium battery, a copper foil is a current mainstream. To pursue relatively high energy density, the copper foil tends to be thinner. The copper foil is developed from a previous dozen centimeters to about 10 centimeters today, and may be kept within five centimeters in the future.

As a thickness of the copper foil is reduced, although energy density of the battery is improved to a certain extent, because the copper foil is a good thermal conductor, when the thickness of the copper foil is reduced, heat dissipation of the battery becomes difficult, resulting in deterioration of safety performance of the battery. In addition, internal resistance of the battery is increased, and power of the battery is also reduced. Therefore, how to make the battery have both high energy density and relatively high safety performance is an important technical problem that needs to be resolved urgently today.

The following describes a battery cell, a battery, and a power consuming apparatus in this application with reference to the accompanying drawings.

### [Battery cell]

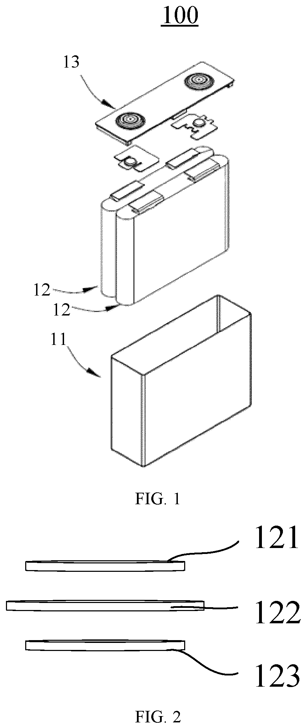

A first aspect of this application provides a battery cell. FIG. 1 is a schematic structural diagram of a battery cell according to an embodiment of this application, and FIG. 2 is a schematic structural diagram of an electrode assembly according to an embodiment of this application. As shown in FIG. 1 and FIG. 2, the battery cell 100 includes: an electrode assembly 12, where the electrode assembly 12 includes a positive electrode plate 121 and a negative electrode plate 123; and an electrolyte solution, where the electrolyte solution includes a first electrolyte salt, and a molecular formula of the first electrolyte salt is: 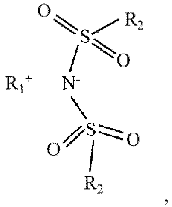 where R₁ is one of Li, Na, K, Mg, and Al, R₂ is at least one of element O, element S, element F, and C1-C3 alkyl or C1-C3 alkyl substituted with element F, and based on 100 parts by weight of the electrolyte solution, content W₁ of the first electrolyte salt ranges from 2 parts by weight to 20 parts by weight.

It has been found through research that adding the first electrolyte salt whose molecular formula is 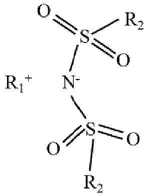 to the electrolyte solution can not only improve energy density of a battery, but also improve safety performance of the battery.

The first electrolyte salt is added to the electrolyte solution, the R₁ group in the molecular formula of the first electrolyte salt may be one of Li, Na, K, Mg, and Al, and the R₂ group may be at least one of element O, element S, element F, and C1-C3 alkyl or C1-C3 alkyl substituted with element F. The first electrolyte salt containing the R₂ group has relatively large ion dissociation energy, and more active R₁ ions can be dissociated, that is, R₁ ions are easily reduced. Therefore, the dissociated R₁ ions in a molecular structure of the first electrolyte salt are more likely to be the active R₁ ions, to contribute a partial capacity, so as to help to improve the energy density of the battery. In addition, the first electrolyte salt containing the R₂ group has relatively high thermal stability, to help to improve overall heat resistance of the electrolyte solution, and further improve the safety performance of the battery.

Generally, the battery cell 100 includes the positive electrode plate 121, a separator 122, the negative electrode plate 123, and the electrolyte solution. During charging and discharging of the battery, active ions are intercalated and deintercalated back and forth between the positive electrode and the negative electrode. The electrolyte plays a role of conducting ions between the positive electrode and the negative electrode. The separator 122 is arranged between the positive electrode and the negative electrode, and mainly plays a role of preventing a short circuit between the positive electrode and the negative electrode while allowing the ions to pass through.

It should be noted herein that the "positive electrode plate" and the "negative electrode plate" mentioned in this embodiment of this application refer to an entirety of the positive electrode plate and the negative electrode plate including active materials, current collectors, or other additives.

In some embodiments, R₁ is Li, R₂ is element F, and the first electrolyte salt is lithium bis(fluorosulfonyl)imide (LiFSI).

In the solution, to improve energy density and safety performance of the battery cell 100, the first electrolyte salt is added to the electrolyte solution, where the R₂ group in the first electrolyte salt may be at least one of element O, element S, element F, and C1-C3 alkyl or C1-C3 alkyl substituted with element F. The R₁ group is Li, and the R₂ group is element F, that is, the first electrolyte salt is LiFSI. LiFSI is easy to obtain and has relatively large ion dissociation energy and good heat resistance performance. In this way, the energy density and the safety performance of the battery can be improved, and LiFSI can be widely used in large-scale production.

It should be noted herein that when R₁ is Li, the electrolyte solution may be used in a lithium battery. When R₁ is Na, the electrolyte solution may be used in a sodium battery, and the rest can be deduced by analogy. The following embodiments are described by using the lithium battery as an example, but a limitation on a type of the battery in this application is only limited to R₁, without another limitation.

In addition, the lithium battery in the embodiments of this application may be a lithium-ion battery or a lithium metal battery. This is not limited in this application. The following embodiments are described by using the lithium-ion battery as an example.

In some embodiments, based on 100 parts by weight of the electrolyte solution, the content W₁ of the first electrolyte salt ranges from 10 parts by weight to 16 parts by weight.

In the solution, because the first electrolyte salt has the relatively large ion dissociation energy, more active lithium ions that contribute a capacity can be dissociated. In addition, the first electrolyte salt has relatively high heat resistance and is added to the electrolyte solution, so that the overall heat resistance of the electrolyte solution can be improved. However, the first electrolyte salt also has some adverse effects, for example, causes corrosion on a current collector. If only the content of the first electrolyte salt in the electrolyte solution is increased, the current collector is eventually corroded. Consequently, the energy density and the safety performance of the battery cannot be improved, and the entire battery is open circuited. Therefore, the first electrolyte salt occupies 10% to 16% of total content of the electrolyte solution. This can not only maintain a normal function of the battery, but also enable the first electrolyte salt to exert a function, to improve the energy density and the safety performance of the battery.

In some embodiments, the negative electrode plate 123 includes a negative electrode current collector and a negative electrode active material coated on at least one side of the negative electrode current collector; and the content W₁ of the first electrolyte salt and a thickness H₁ of the negative electrode current collector satisfy: 1 g·µm⁻¹≤W₁/H₁≤10 g µm⁻¹, and optionally satisfy: 1.4 g µm⁻¹≤W₁/H₁≤5.4 g µm⁻¹.

In the solution, reducing the thickness of the negative electrode current collector helps to further improve the energy density of the battery. However, because the thickness of the negative electrode current collector is reduced, heat dissipation of the negative electrode current collector becomes poor, and internal resistance becomes large, finally resulting in poor safety performance and low power of the battery. A ratio of parts by weight of the first electrolyte salt to the thickness of the negative electrode current collector is kept within 1 g·µm⁻¹ to 10 g·µm⁻¹, especially within 1.4 g·µm⁻¹ to 5.4 g·µm⁻¹, and the ratio of the parts by weight of the first electrolyte salt to the thickness of the negative electrode current collector can be kept within a reasonable range. The energy density of the battery can be further improved based on the reasonable range; and the first electrolyte salt improves the heat resistance of the electrolyte solution, reduces heat generation of the battery, and compensates for a decrease in heat dissipation performance caused by a reduced thickness of the negative electrode current collector, to further improve the safety performance of the battery. In addition, the heat resistance of the electrolyte solution of the battery is improved, resistance of the battery is reduced, and the power of the battery is increased, so that the battery has high energy density, high safety performance, and high power.

Unless otherwise specified, 1 part by weight herein is 1 g. If the content of the first electrolyte salt is 15 parts by weight, the first electrolyte salt is 15 g. However, 1 part by weight being 1 g is merely an example for description. This is not limited in this application. For example, 1 part by weight may alternatively be 5 g.

In the embodiments of this application, the ratio of the content of the first electrolyte salt to the thickness of the negative electrode current collector may be 2 g·µm⁻¹, 4 g·µm⁻¹, 5 g·µm⁻¹, or 6 g·µm⁻¹, provided that a range of the ratio is kept within 1 g·µm⁻¹ to 10 g·µm⁻¹. This is not specifically limited in this application.

It should be noted herein that a calculation method of the ratio of the content of the first electrolyte salt to the thickness of the negative electrode current collector is: the content W₁ of the first electrolyte salt/the thickness H₁ of the negative electrode current collector.

In some embodiments, compaction density P of the negative electrode active material and the content W₁ of the first electrolyte salt satisfy: 0.05 g² cm⁻³≤P/W₁≤0.5 g² cm⁻³, and optionally satisfy: 0.08 g² cm³≤P/W₁≤0.17 g² cm⁻³.

In the solution, a ratio of the compaction density of the negative electrode active material to the parts by weight of the first electrolyte salt is kept within 0.05 g² cm⁻³ to 0.5 g² cm⁻³, especially within 0.08 g² cm⁻³ to 0.17 g² cm⁻³. This can effectively reduce a negative effect caused by the reduced thickness of the negative electrode current collector on the power and the safety performance of the battery, so that the battery cell 100 has high energy density, high power performance, and high safety performance.

In the embodiments of this application, the ratio of the compaction density of the negative electrode active material to the parts by weight of the first electrolyte salt may be 0.08 g² cm⁻³, 0.1 g² cm⁻³, 0.25 g² cm³, or 0.4 g² cm⁻³, provided that a range of the ratio is kept within 0.05 g² cm⁻³ to 0.5 g² cm⁻³. This is not specifically limited in this application.

In some embodiments, the thickness H₁ of the negative electrode current collector ranges from 2 µm to 10 µm, and optionally ranges from 3 µm to 7 µm.

In the solution, the thickness of the negative electrode current collector is maintained within 2 µm to 10 µm, especially within 3 µm to 7 µm. This can avoid a decrease in the energy density of the battery caused by an excessively large thickness of the negative electrode current collector and can also avoid decreases in the safety performance and the power caused by an excessively small thickness of the negative electrode current collector, so that the battery can have high energy density, safety performance, and power performance.

In the embodiments of this application, the thickness of the negative electrode current collector may be 3 µm, 5 µm, 6 µm, or 10 µm, provided that the thickness of the negative electrode current collector is kept within 2 µm to 10 µm. This is not specifically limited in this application.

In some embodiments, the compaction density P of the negative electrode active material ranges from 1 g cm⁻³ to 2 g cm⁻³, and optionally ranges from 1.4 g cm⁻³ to 1.7 g cm⁻³.

In the solution, the compaction density of the negative electrode active material is maintained within 1 g cm⁻³ to 2 g cm⁻³, especially within 1.4 g cm⁻³ to 1.7 g cm⁻³. This can avoid an increase in the internal resistance of the battery and a decrease in the power of the battery caused by excessively high compaction density of the negative electrode active material and can also avoid excessively low energy density of the battery caused by excessively low compaction density of the negative electrode active material, so that the battery cell 100 can have high energy density, safety performance, and power performance.

In the embodiments of this application, the compaction density of the negative electrode active material may be 1 g cm⁻³, 1.5 g cm³, 1.8 g cm³, or 2 g cm⁻³, provided that the compaction density is maintained within 1 g cm⁻³ to 2 g cm⁻³. This is not specifically limited in this application.

In some embodiments, the electrolyte solution further includes a second electrolyte salt, and the second electrolyte salt is lithium hexafluorophosphate.

In the solution, the second electrolyte salt, namely, the lithium hexafluorophosphate, is added to the electrolyte solution, so that corrosion of the first electrolyte salt on a positive electrode current collector can be inhibited, and a side effect of the first electrolyte salt can be reduced.

In some embodiments, based on 100 parts by weight of the electrolyte solution, content W₂ of the second electrolyte salt ranges from 1 part by weight to 15 parts by weight, and optionally ranges from 2 parts by weight to 10 parts by weight.

In the solution, the content of the second electrolyte salt in the electrolyte solution is maintained within 1% to 15%, especially within 2% to 10%. This can avoid reduction of cycle performance of the battery and rapid fading of a capacity of the battery when a proportion occupied by the second electrolyte salt in the electrolyte solution is excessively high (the second electrolyte salt has relatively poor thermal stability and is easily hydrolyzed). In addition, corrosion on the positive electrode current collector caused by excessively low added content of the second electrolyte salt can be avoided.

In some embodiments, the positive electrode plate 121 includes a positive electrode current collector and a positive electrode active material layer coated on at least one side of the positive electrode current collector; and the content W₁ of the first electrolyte salt, the content W₂ of the second electrolyte, and a thickness H₂ of the positive electrode current collector satisfy: 0.05 µm⁻¹≤W₁/(W₂×H₂)≤1 µm⁻¹, and optionally satisfy: 0.07 µm⁻¹≤ W₁/(W₂×H₂)≤0.6 µm⁻¹.

In the solution, to inhibit a corrosive effect of the first electrolyte salt on the positive electrode current collector, the second electrolyte salt is added to the electrolyte solution. A strength of corrosion on the positive electrode current collector can be directly determined by using a ratio of the parts by weight of the first electrolyte salt to parts by weight of the second electrolyte salt and the thickness of the positive electrode current collector. A range of the ratio is kept within 0.05 µm⁻¹ to 1 µm⁻¹, especially within 0.07 µm⁻¹ to 0.6 µm⁻¹, so that the first electrolyte salt can help to improve the energy density and the safety performance of the battery, and deterioration of overall performance of the battery due to the corrosion on the positive electrode current collector caused by addition of the first electrolyte salt can be avoided.

In the embodiments of this application, the content of the first electrolyte salt/(the content of the second electrolyte salt×the thickness of the positive electrode current collector) may be 0.05 µm⁻¹, 0.08 µm⁻¹, 0.2 µm⁻¹, or 0.5 µm⁻¹, provided that the content of the first electrolyte salt/(the content of the second electrolyte salt×the thickness of the positive electrode current collector) is kept within 0.05 µm⁻¹ to 1 µm⁻¹. This is not specifically limited in this application.

In some embodiments, the thickness H₂ of the positive electrode current collector ranges from 5 µm to 20 µm, and optionally ranges from 8 µm to 15 µm.

In the solution, the thickness of the positive electrode current collector is maintained within 5 µm to 20 µm, especially within 8 µm to 15 µm, so that a corrosion hazard caused by the first electrolyte salt on the positive electrode current collector can be reduced, and the energy density of the battery cannot be reduced.

In some embodiments, the electrolyte solution further includes fluoroethylene carbonate.

In the solution, to improve the energy density and the safety performance of the battery, the first electrolyte salt is added to the electrolyte solution. However, the first electrolyte salt reacts violently with LiC₆ generated during cycling in the battery, and explosion may further occur. The fluoroethylene carbonate is added to the electrolyte solution, the reaction between the first electrolyte salt and LiC₆ can be inhibited, thereby further improving the safety performance of the battery.

In some embodiments, content W₃ of the fluoroethylene carbonate and the content W₁ of the first electrolyte salt satisfy: 0.1≤W₃/W₁≤0.5, and optionally satisfy: 0.12≤W₃/W₁≤0.3.

In the solution, a ratio of parts by weight of the fluoroethylene carbonate to the content of the first electrolyte salt is set to 0.1 to 0.5, especially 0.12 to 0.3. This can not only avoid poor stability of the electrolyte solution at high temperature caused by excessively high content of the fluoroethylene carbonate in the electrolyte solution, but also avoid a case in which the reaction between the first electrolyte salt and LiC₆ cannot be inhibited when the content of the fluoroethylene carbonate in the electrolyte solution is excessively low, so that a function of the first electrolyte salt is exerted, and the stability of the electrolyte solution at high temperature is not affected.

In some embodiments, based on 100 parts by weight of the electrolyte solution, the content W₃ of the fluoroethylene carbonate ranges from 2 parts by weight to 10 parts by weight, and optionally ranges from 2 parts by weight to 5 parts by weight.

In the solution, the content of the fluoroethylene carbonate in the electrolyte solution is maintained within 2% to 10%, especially within 2% to 5%, so that instability of the electrolyte solution due to addition of excessive fluoroethylene carbonates can be avoided, and the reaction between the first electrolyte salt and LiC₆ can be avoided, thereby improving the safety performance of the battery.

### [Positive electrode plate]

The positive electrode plate includes a positive electrode current collector and a positive electrode film layer arranged on at least one surface of the positive electrode current collector, where the positive electrode film layer includes a positive electrode active material.

As an example, the positive electrode current collector has two opposite surfaces in a thickness direction of the positive electrode current collector, and the positive electrode film layer is arranged on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, or the like) on the polymer material base layer (for example, a substrate of polypropylene (PP), polyethylene terephthalate (PET), polybutylene terephthalate (PBT), polystyrene (PS), or polyethylene (PE)).

In some embodiments, the positive electrode active material may be a positive electrode active material used for a battery well-known in the art. As an example, the positive electrode active material may include at least one of the following materials: lithium-containing phosphate of an olivine structure, a lithium transition metal oxide, and respective modified compounds thereof. However, this application is not limited to such materials, and may alternatively use other conventional materials that can be used as positive electrode active materials for batteries. One of these positive electrode active materials may be used alone or two or more of these positive electrode active materials may be combined for use. Examples of the lithium transition metal oxide may include, but are not limited to, at least one of a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (or briefly referred to as NCM₃₃₃), LiNi_{0.5}Co_{0.2}Mn_{0.3}O₂ (or briefly referred to as NCM₅₂₃), LiNi_{0.5}Co_{0.25}Mn_{0.25}O₂ (or briefly referred to as NCM₂₁₁), LiNi_{0.6}Co_{0.2}Mn_{0.2}O₂ (or briefly referred to as NCM₆₂₂), or LiNi_{0.8}Co_{0.1}Mn_{0.1}O₂ (or briefly referred to as NCM₈₁₁), a lithium nickel cobalt aluminum oxide (for example, LiNi_{0.85}Co_{0.15}Al_{0.05}O₂), and a modified compound thereof. Examples of the lithium-containing phosphate of the olivine structure may include, but are not limited to, at least one of lithium iron phosphate (for example, LiFePO₄ (or briefly referred to as LFP)), a composite material of the lithium iron phosphate and carbon, lithium manganese phosphate (for example, LiMnPO₄), a composite material of the lithium manganese phosphate and carbon, lithium iron manganese phosphate, and a composite material of the lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared by: dispersing the foregoing components for preparing the positive electrode plate, for example, the positive electrode active material, the conductive agent, the binder, and any other components, in a solvent (for example, N-methyl pyrrolidone) to form a positive electrode slurry; and coating the positive electrode slurry on the positive electrode current collector, followed by drying, cold pressing, and other procedures, to obtain the positive electrode plate.

### [Negative electrode plate]

The negative electrode plate includes a negative electrode current collector and a negative electrode film layer arranged on at least one surface of the negative electrode current collector. The negative electrode film layer includes a negative electrode active material.

As an example, the negative electrode current collector has two opposite surfaces in a thickness direction of the negative electrode current collector, and the negative electrode film layer is arranged on either or both of the two opposite surfaces of the negative electrode current collector.

In some embodiments, the negative electrode current collector may be a metal foil or a composite current collector. For example, the metal foil may be a copper foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material used for a battery well-known in the art. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon oxide, a silicon-carbon composite, a silicon-nitrogen composite, and a silicon alloy. The tin-based material may be selected from at least one of elemental tin, a tin-oxide compound, and a tin alloy. However, this application is not limited to these materials, and other conventional materials that can be used as the negative electrode active material of the battery may also be used. One of these negative electrode active materials may be used alone or two or more of these negative electrode active materials may be combined for use.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other auxiliary agents such as a thickener (for example, sodium carboxymethyl cellulose (CMC-Na)).

In some embodiments, the negative electrode plate may be prepared by: dispersing the foregoing components for preparing the negative electrode plate, for example, the negative electrode active material, the conductive agent, the binder, and any other components, in a solvent (for example, deionized water) to form a negative electrode slurry; and coating the negative electrode slurry on the negative electrode current collector, followed by drying, cold pressing, and other processes, to obtain the negative electrode plate.

### [Electrolyte solution]

The electrolyte solution plays a role of conducting ions between the positive electrode plate and the negative electrode plate. In an embodiment of this application, the electrolyte solution includes the first electrolyte salt, the second electrolyte salt, and the fluoroethylene carbonate described in any one of the foregoing embodiments.

In some embodiments, the electrolyte solution further includes a solvent. The solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfoxide, and diethyl sulfone.

In some embodiments, the electrolyte solution further optionally includes an additive. For example, the additive may include a negative electrode film forming additive and a positive electrode film forming additive, and may further include an additive that can improve performance of the battery, for example, an additive that improves overcharging performance of the battery or an additive that improves high or low temperature performance of the battery.

### [Separator]

In some embodiments, the battery cell 100 further includes a separator. The type of the separator in this application is not particularly limited in this application, and any well-known separator of a porous structure having good chemical stability and mechanical stability may be selected.

In some embodiments, a material of the separator may be selected from at least one of a glass fiber, a non-woven fabric, polyethylene, polypropylene, and polyvinylidene fluoride. The separator may be a single-layer thin film or a multi-layer composite thin film, which is not particularly limited herein. When the separator is the multi-layer composite thin film, the layers may be of the same or different materials, which is not particularly limited herein.

In some embodiments, an electrode assembly may be formed by using the positive electrode plate, the negative electrode plate, and the separator through a winding process or a lamination process.

In some embodiments, the battery cell 100 may include an outer packaging. The outer packaging may be configured to package the foregoing electrode assembly and the electrolyte solution.

In some embodiments, an outer packaging of the lithium-ion battery may be a hard case, for example, a hard plastic case, an aluminum case, or a steel case. Alternatively, the outer packaging of the battery cell 100 may be a soft pack, for example, a pouch-type soft pack. A material of the soft pack may be plastic, and examples of the plastic may include polypropylene, polybutylene terephthalate, polybutylene succinate, and the like.

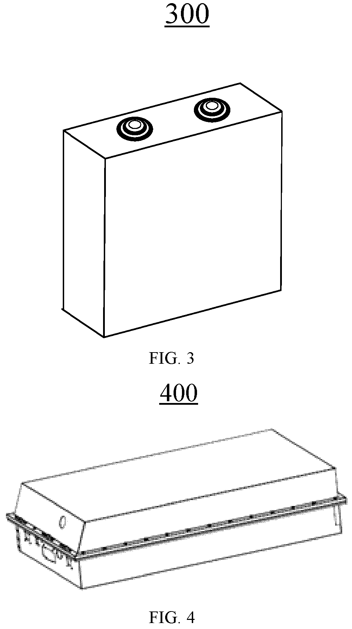

A shape of the battery cell 100 is not particularly limited in this application, and may be a cylinder, a rectangle, or any other shape. For example, FIG. 3 is a schematic diagram of a battery cell according to an embodiment of this application.

In some embodiments, referring to FIG. 1, the outer packaging may include a housing 11 and a cover plate 13. The housing 11 may include a bottom plate and a side plate connected to the bottom plate. The bottom plate and the side plate enclose an accommodating cavity. The housing 11 is provided with an opening in communication with the accommodating cavity, and the cover plate 13 can cover the opening to close the accommodating cavity. The positive electrode, the negative electrode, and a solid electrolyte may form an electrode assembly 12 through a winding process or a lamination process. The electrode assembly 12 is packaged in the accommodating cavity. One or more electrode assemblies 12 may be included in the battery cell 100. A person skilled in the art may select the electrode assembly 12 according to an actual requirement.

In some embodiments, the battery cell 100 may be assembled into a battery module. The battery module may include one or more battery cells 100, and a specific quantity of battery cells 100 may be selected by a person skilled in the art depending on the application and capacity of the battery module.

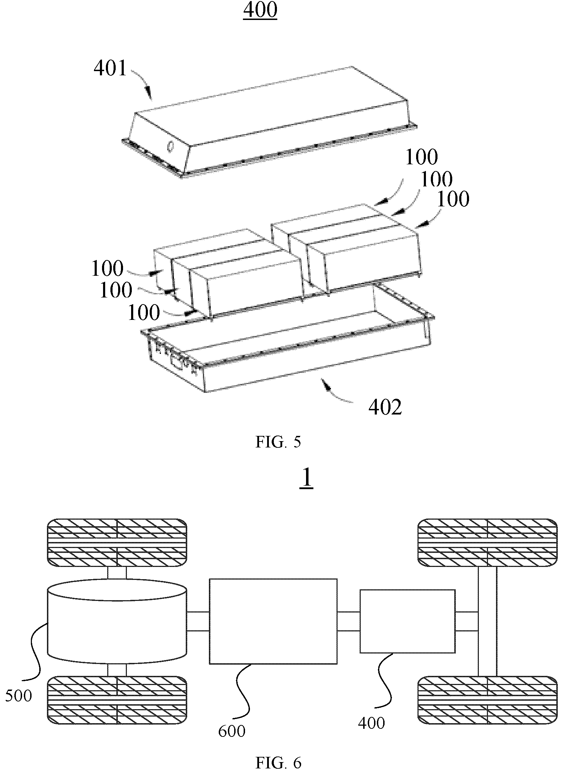

FIG. 4 is a schematic diagram of a battery according to an embodiment of this application, and FIG. 5 is a schematic structural diagram of a battery according to an embodiment of this application. Referring to FIG. 4 and FIG. 5, the battery 400 may include a battery case and a plurality of battery cells 100 arranged in the battery case. The battery case includes an upper case body 401 and a lower case body 402. The upper case body 401 can cover the lower case body 402 to form an enclosed space for accommodating the battery cells 100. The plurality of battery cells 100 may be arranged in the battery case in any manner.

In addition, this application further provides a power consuming apparatus. The power consuming apparatus includes at least one of the battery cell or the battery provided in this application. The battery cell or the battery may be used as a power supply of the power consuming apparatus and may also be used as an energy storage unit of the power consuming apparatus. The power consuming apparatus may include, but is not limited to, a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

For example, FIG. 6 is a schematic structural diagram of a vehicle according to an embodiment of this application. As shown in FIG. 6, the vehicle 1 may be a fuel vehicle, a gas vehicle, or a new energy vehicle. The new energy vehicle may be a pure electric vehicle, a hybrid electric vehicle, an extended-range electric vehicle, or the like. A motor 500, a controller 600, and a battery 400 may be arranged inside the vehicle 1, and the controller 600 is configured to control the battery 400 to supply power to the motor 500. For example, the battery 400 may be arranged on the bottom, front, or rear of the vehicle 1. The battery 400 may be configured to supply power to the vehicle 1. For example, the battery 400 may be used as an operating power supply of the vehicle 1, and may be used as a circuit system of the vehicle 1, for example, may be used for a requirement on operation electricity when the vehicle 1 starts, navigates, and runs. In another embodiment of this application, the battery 400 may be used not only as the operating power supply of the vehicle 1, but also as a driving power supply of the vehicle 1, and alternatively or partially replaces fuel or natural gas to provide driving power for the vehicle 1.

As the power consuming apparatus, a sodium battery cell or battery may be selected according to a usage requirement of the power consuming apparatus.

The power consuming apparatus may be a pure electric vehicle, a hybrid electric vehicle, a plug-in hybrid electric vehicle, or the like. To meet requirements of the power consuming apparatus for high power and high energy density of the battery, the sodium battery cell or battery may be used.

Another example of the apparatus may be a phone, a tablet computer, a notebook computer, or the like. The apparatus usually needs to be light and thin, and the battery cell may be used as a power supply.

### [Example]

The following describes examples of this application. The examples described below are exemplary and are only intended to explain this application, and cannot be understood as limitations to this application. If the specific technology or conditions are not specified in the examples, the technology or conditions described in the literature in this field or the product manual shall be followed. The reagents or instruments used without specifying the manufacturer are all conventional products that can be obtained through market procurement.

### [Example 1]

### 1. Preparation of a lithium-ion battery

(1.1) Preparation of a positive electrode: LiFePO₄(LFP), acetylene black as a conductive agent, and a binder were dissolved into N-methylpyrrolidone (NMP) as a solvent at a weight ratio of 95%:3%:2%, and fully stirred and uniformly mixed to prepare a positive electrode active material. The positive electrode active material was uniformly coated on an aluminum foil of a positive electrode current collector, followed by drying, cold pressing, and slitting to obtain a positive electrode plate. A thickness of the AI foil was 10 µm.

(1.2) Preparation of a negative electrode: Artificial graphite as an active material, acetylene black as a conductive agent, styrene butadiene rubber (SBR) as a binder, and sodium carboxymethyl cellulose (CMC) as a thickener were fully stirred and uniformly mixed at a weight ratio of 97.5%:0.7%:1.8%:1% in an appropriate amount of deionized water solvent system to obtain a negative electrode active material. The negative electrode active material was coated on a Cu foil, followed by drying, cold pressing, and slitting to obtain a negative electrode plate. A thickness of the Cu foil was 5 µm, and compaction density of the negative electrode active material was 1.5 g·cm⁻³.

### (1.3) Preparation of a separator: A PE porous polymer thin film was used as a separator.

(1.4) Electrolyte solution: lithium bis(fluorosulfonyl)imide (LiFSI), lithium hexafluorophosphate (LiPF₆), fluoroethylene carbonate (FEC), ethylene carbonate (EC), and dimethyl carbonate were mixed at a mass parts of weight of 15:5:5:22.5:52.5, and stirred uniformly.

(1.5) Assembly: The positive electrode plate, the separator, and the negative electrode plate were stacked in order, so that the separator was located between the positive electrode and the negative electrode to play a role of isolation, and winding was performed to obtain an electrode assembly, and the electrolyte solution was added. Subsequently, hot pressing was performed at 100°C and 250 MPa for 2 minutes to obtain the lithium-ion battery.

### [Example 2]

A preparation process of a lithium-ion battery in Example 2 is basically the same as that in Example 1, and a difference lies in that a thickness of the Cu foil is 6 µm

### [Example 3]

A preparation process of a lithium-ion battery in Example 3 is basically the same as that in Example 1, and a difference lies in that a thickness of the Cu foil is 4 µm

### [Example 4]

A preparation process of a lithium-ion battery in Example 4 is basically the same as that in Example 1, and a difference lies in that parts by weight of LiFSI in the electrolyte solution are 12 parts by weight.

### [Example 5]

A preparation process of a lithium-ion battery in Example 5 is basically the same as that in Example 1, and a difference lies in that parts by weight of LiFSI in the electrolyte solution are 16 parts by weight.

### [Example 6]

A preparation process of a lithium-ion battery in Example 6 is basically the same as that in Example 1, a difference lies in that compaction density of the negative electrode active material is 1.8 g cm⁻³.

### [Example 7]

A preparation process of a lithium-ion battery in Example 7 is basically the same as that in Example 1, and a difference lies in that parts by weight of LiPF₆ in the electrolyte solution are 8 parts by weight.

### [Example 8]

A preparation process of a lithium-ion battery in Example 8 is basically the same as that in Example 1, and a difference lies in that parts by weight of LiPF₆ in the electrolyte solution are 10 parts by weight.

### [Example 9]

A preparation process of a lithium-ion battery in Example 9 is basically the same as that in Example 1, and a difference lies in that parts by weight of FEC in the electrolyte solution are 6 parts by weight.

### [Example 10]

A preparation process of a lithium-ion battery in Example 10 is basically the same as that in Example 1, and a difference lies in that parts by weight of FEC in the electrolyte solution are 3 parts by weight.

### [Example 11]

A preparation process of a lithium-ion battery in Example 11 is basically the same as that in Example 1, and a difference lies in that a first electrolyte salt in the electrolyte solution is different.

### [Example 12]

A preparation process of a lithium-ion battery in Example 12 is basically the same as that in Example 11, and a difference lies in that content of a first electrolyte salt in the electrolyte solution is different.

### [Comparative example 1]

A preparation process of a lithium-ion battery in Comparative example 1 is basically the same as that in Example 1, and a difference lies in that LiFSI is not added to the electrolyte solution.

### [Comparative example 2]

A preparation process of a lithium-ion battery in Comparative example 2 is basically the same as that in Example 1, and a difference lies in that LiPF₆ is not added to the electrolyte solution.

### [Comparative example 3]

A preparation process of a lithium-ion battery in Comparative example 3 is basically the same as that in Example 1, and a difference lies in that FEC is not added to the electrolyte solution.

### [Comparative example 4]

A preparation process of a lithium-ion battery in Comparative example 4 is basically the same as that in Example 1, and a difference lies in that a thickness of the Cu foil is 20 µm

### [Comparative example 5]

A preparation process of a lithium-ion battery in Comparative example 5 is basically the same as that in Example 1, and a difference lies in that parts by weight of LiFSI in the electrolyte solution are 8 parts by weight.

### [Comparative example 6]

A preparation process of a lithium-ion battery in Comparative example 6 is basically the same as that in Example 1, and a difference lies in that parts by weight of LiFSI in the electrolyte solution are 25 parts by weight.

### [Comparative example 7]

A preparation process of a lithium-ion battery in Comparative example 7 is basically the same as that in Example 1, a difference lies in that compaction density of the negative electrode active material is 2.5 g cm⁻³.

### [Comparative example 8]

A preparation process of a lithium-ion battery in Comparative example 8 is basically the same as that in Example 1, and a difference lies in that parts by weight of LiPF₆ in the electrolyte solution are 35 parts by weight.

### [Comparative example 9]

A preparation process of a lithium-ion battery in Comparative example 9 is basically the same as that in Example 1, and a difference lies in that parts by weight of FEC in the electrolyte solution are 20 parts by weight.

### (2) Performance representation of the negative electrode active material of the lithium-ion battery

Measurement of compaction density: The prepared negative electrode plate was obtained, a region was cut by using a circular or square cutter, a thickness was measured and a weight was weighed, a negative electrode material was washed away by using an acetone-alcohol mixture, drying was performed through blowing, and a mass and a thickness of the remaining Cu foil were measured. A difference between the two weights is divided by an area to calculate surface density, and the surface density is divided by a thickness difference, to obtain the compaction density.

### (3) Performance representation of the lithium-ion battery

(3.1) Explosion temperature: At normal temperature, the battery was charged to 4.35 V at current density of 0.2 C, and after completion of charging, the battery was placed in an incubator. The incubator was heated at 2°C/min from normal temperature, then stood for 1h after being heated to 100°C, then heated at 5°C/min, and stood for 30 minutes after 5°C is increased each time until the battery exploded. The temperature at which the battery exploded was recorded. A measurement result is shown in Table 1.

**Table 1: Explosion temperatures of lithium-ion batteries in Example 1 to Example 12 and Comparative example 1 to Comparative example 9**

| Group | R₂ group | Parts by weight of the first electrolyte salt in the electrolyte solution | Parts by weight of the second electrolyte salt in the electrolyte solution | Parts by weight of the fluoroethylene carbonate in the electrolyte solution | Compaction density (g cm⁻³) of the negative electrode active material | Thickness (µm) of the Cu foil | Thickness (µm) of the Al foil | Explosion temperature (°C) |
|---|---|---|---|---|---|---|---|---|
| Example 1 | F | 15 | 5 | 4 | 1.5 | 5 | 10 | 160 |
| Example 2 | F | 15 | 5 | 4 | 1.5 | 6 | 10 | 165 |
| Example 3 | F | 15 | 5 | 4 | 1.5 | 4 | 10 | 155 |
| Example 4 | F | 12 | 5 | 4 | 1.5 | 5 | 10 | 155 |
| Example 5 | F | 16 | 5 | 4 | 1.5 | 5 | 10 | 170 |
| Example 6 | F | 15 | 5 | 4 | 1.8 | 5 | 10 | 155 |
| Example 7 | F | 15 | 8 | 4 | 1.5 | 5 | 10 | 155 |
| Example 8 | F | 15 | 10 | 4 | 1.5 | 5 | 10 | 155 |
| Example 9 | F | 15 | 5 | 6 | 1.5 | 5 | 10 | 160 |
| Example 10 | F | 15 | 5 | 3 | 1.5 | 5 | 10 | 160 |
| Example 11 | O | 15 | 5 | 4 | 1.5 | 5 | 10 | 155 |
| Example 12 | O | 10 | 5 | 4 | 1.5 | 5 | 10 | 150 |
| Comparative example 1 | F | 0 | 5 | 4 | 1.5 | 5 | 10 | 130 |
| Comparative example 2 | F | 15 | 0 | 4 | 1.5 | 5 | 10 | 170 |
| Comparative example 3 | F | 15 | 5 | 0 | 1.5 | 5 | 10 | 170 |
| Comparative example 4 | F | 15 | 5 | 4 | 1.5 | 20 | 10 | 180 |
| Comparative example 5 | F | 8 | 5 | 4 | 1.5 | 5 | 10 | 150 |
| Comparative example 6 | F | 25 | 5 | 4 | 1.5 | 5 | 10 | 140 |
| Comparative example 7 | F | 15 | 5 | 4 | 2.5 | 5 | 10 | 160 |
| Comparative example 8 | F | 15 | 35 | 4 | 1.5 | 5 | 10 | 160 |
| Comparative example 9 | F | 15 | 5 | 20 | 1.5 | 5 | 10 | 160 |

| | | | | | | | | |
|---|---|---|---|---|---|---|---|---|
| Note: The electrolyte solution has 100 parts by weight. | | | | | | | | |

It can be learned with reference to Example 1, Example 4, and Example 5 and Comparative example 1, Comparative example 5, and Comparative example 6 that in the lithium-ion battery, as the content of the first electrolyte salt in the electrolyte solution is increased, the explosion temperature of the battery is increased. However, if the content of the first electrolyte salt is excessively high, the explosion temperature of the battery is reduced. It can be learned with reference to Example 1 to Example 3 and Comparative example 4 that a smaller thickness of the Cu foil of the negative electrode current collector in the lithium-ion battery indicates a lower explosion temperature of the battery. It can be learned with reference to Example 1 and Example 6 that larger compaction density of the negative electrode active material in the lithium-ion battery indicates a lower explosion temperature of the battery. It can be learned with reference to Example 11 and Example 12 that a plurality of first electrolyte salts having different R₂ groups can play a role of improving the explosion temperature of the lithium-ion battery, so that safety performance of the battery can be improved.

(3.2) Energy density: At normal temperature, the battery was charged to 4.35 V at current density of 0.5 C, and then discharged to 2.5 V, and the energy density in a discharging process was recorded; and the process was repeated for three times, and average discharge energy E was calculated. A mass of the lithium-ion battery was weighed as M, and the energy density of the lithium-ion battery was calculated as GED=E/M. A measurement result is shown in Table 2.

**Table 2 Energy density of lithium-ion batteries in Example 1 to Example 12 and Comparative example 1 to Comparative example 9**

| Group | R₂ group | Parts by weight of the first electrolyte salt in the electrolyte solution | Parts by weight of the second electrolyte salt in the electrolyte solution | Parts by weight of the fluoroethylene carbonate in the electrolyte solution | Compaction density (g cm⁻³) of the negative electrode active material | Thickness (µm) of the Cu foil | Thickness (µm) of the Al foil | Energy density (Wh/Kg) |
|---|---|---|---|---|---|---|---|---|
| Example 1 | F | 15 | 5 | 4 | 1.5 | 5 | 10 | 250 |
| Example 2 | F | 15 | 5 | 4 | 1.5 | 6 | 10 | 245 |
| Example 3 | F | 15 | 5 | 4 | 1.5 | 4 | 10 | 255 |
| Example 4 | F | 12 | 5 | 4 | 1.5 | 5 | 10 | 248 |
| Example 5 | F | 16 | 5 | 4 | 1.5 | 5 | 10 | 252 |
| Example 6 | F | 15 | 5 | 4 | 1.8 | 5 | 10 | 260 |
| Example 7 | F | 15 | 8 | 4 | 1.5 | 5 | 10 | 250 |
| Example 8 | F | 15 | 10 | 4 | 1.5 | 5 | 10 | 251 |
| Example 9 | F | 15 | 5 | 6 | 1.5 | 5 | 10 | 246 |
| Example 10 | F | 15 | 5 | 3 | 1.5 | 5 | 10 | 252 |
| Example 11 | O | 15 | 5 | 4 | 1.5 | 5 | 10 | 250 |
| Example 12 | O | 10 | 5 | 4 | 1.5 | 5 | 10 | 247 |
| Comparative example 1 | F | 0 | 5 | 4 | 1.5 | 5 | 10 | 247 |
| Comparative example 2 | F | 15 | 0 | 4 | 1.5 | 5 | 10 | 246 |
| Comparative example 3 | F | 15 | 5 | 0 | 1.5 | 5 | 10 | 247 |
| Comparative example 4 | F | 15 | 5 | 4 | 1.5 | 20 | 10 | 200 |
| Comparative example 5 | F | 8 | 5 | 4 | 1.5 | 5 | 10 | 235 |
| Comparative example 6 | F | 25 | 5 | 4 | 1.5 | 5 | 10 | 253 |
| Comparative example 7 | F | 15 | 5 | 4 | 2.5 | 5 | 10 | 252 |
| Comparative example 8 | F | 15 | 35 | 4 | 1.5 | 5 | 10 | 249 |
| Comparative example 9 | F | 15 | 5 | 20 | 1.5 | 5 | 10 | 247 |

| | | | | | | | | |
|---|---|---|---|---|---|---|---|---|
| Note: The electrolyte solution has 100 parts by weight. | | | | | | | | |

It can be learned with reference to Example 1, Example 4, and Example 5 and Comparative example 1, Comparative example 5, and Comparative example 6 that adding the first electrolyte salt to the electrolyte solution can improve the energy density of the lithium-ion battery. It can be learned with reference to Example 1 to Example 3 and Comparative example 4 that a smaller thickness of the Cu foil of the negative electrode current collector in the lithium-ion battery indicates larger energy density of the lithium-ion battery. It can be learned with reference to Example 1 and Example 6 and Comparative Example 7 that the energy density of the lithium-ion battery can be improved by appropriately increasing the compaction density of the negative electrode active material in the lithium-ion battery.

(3.3) Direct current impedance: At normal temperature, the lithium-ion battery was left standing for 5 minutes, charged to 4.35 V at a constant current of 1 C, and then charged at a constant voltage until a current was less than or equal to 0.05 C, so that a state of charge (SOC) of the lithium-ion battery was 100%. After being left standing for 5 minutes, the battery was discharged at a constant current of 1 C to adjust the SOC of the lithium-ion battery to 50%. The lithium-ion battery whose SOC was 50% was left standing for another 10 minutes, and discharged at a constant current of 4 C for 30 s. A voltage U₁ at which the battery was left standing for the last 1 s, a voltage U₂ at which the battery was discharged at the constant current of 4 C for the last 1 s, and a current I at which the battery was discharged at the constant current of 4C were recorded. The direct current impedance R of the lithium-ion battery at 25°C, with the SOC of 50%, and that was discharged at the constant current of 4 C for 30 s is (U₁-U₂)/I. A measurement result is shown in Table 3.

**Table 3 Direct current impedances of lithium-ion batteries in Example 1 to Example 12 and Comparative example 1 to Comparative example 9**

| Group | R₂ group | Parts by weight of the first electrolyte salt in the electrolyte solution | Parts by weight of the second electrolyte salt in the electrolyte solution | Parts by weight of the fluoroethylene carbonate in the electrolyte solution | Compaction density (g cm⁻³) of the negative electrode active material | Thickness (µm) of the Cu foil | Thickness (µm) of the Al foil | Direct current impedance (Ohm) |
|---|---|---|---|---|---|---|---|---|
| Example 1 | F | 15 | 5 | 4 | 1.5 | 5 | 10 | 20.3 |
| Example 2 | F | 15 | 5 | 4 | 1.5 | 6 | 10 | 19.2 |
| Example 3 | F | 15 | 5 | 4 | 1.5 | 4 | 10 | 21.5 |
| Example 4 | F | 12 | 5 | 4 | 1.5 | 5 | 10 | 21.3 |
| Example 5 | F | 16 | 5 | 4 | 1.5 | 5 | 10 | 19.3 |
| Example 6 | F | 15 | 5 | 4 | 1.8 | 5 | 10 | 22.3 |
| Example 7 | F | 15 | 8 | 4 | 1.5 | 5 | 10 | 21.5 |
| Example 8 | F | 15 | 10 | 4 | 1.5 | 5 | 10 | 20.7 |
| Example 9 | F | 15 | 5 | 6 | 1.5 | 5 | 10 | 20.7 |
| Example 10 | F | 15 | 5 | 3 | 1.5 | 5 | 10 | 20.7 |
| Example 11 | O | 15 | 5 | 4 | 1.5 | 5 | 10 | 20.8 |
| Example 12 | O | 10 | 5 | 4 | 1.5 | 5 | 10 | 22.1 |
| Comparative example 1 | F | 0 | 5 | 4 | 1.5 | 5 | 10 | 24.7 |
| Comparative example 2 | F | 15 | 0 | 4 | 1.5 | 5 | 10 | 20.1 |
| Comparative example 3 | F | 15 | 5 | 0 | 1.5 | 5 | 10 | 25.1 |
| Comparative example 4 | F | 15 | 5 | 4 | 1.5 | 20 | 10 | 18 |
| Comparative example 5 | F | 8 | 5 | 4 | 1.5 | 5 | 10 | 23.4 |
| Comparative example 6 | F | 25 | 5 | 4 | 1.5 | 5 | 10 | 23.1 |
| Comparative example 7 | F | 15 | 5 | 4 | 2.5 | 5 | 10 | 22.5 |
| Comparative example 8 | F | 15 | 35 | 4 | 1.5 | 5 | 10 | 21.6 |
| Comparative example 9 | F | 15 | 5 | 20 | 1.5 | 5 | 10 | 20.9 |

| | | | | | | | | |
|---|---|---|---|---|---|---|---|---|
| Note: The electrolyte solution has 100 parts by weight. | | | | | | | | |

It can be learned with reference to Example 1, Example 4, and Example 5 and Comparative example 1, Comparative example 5, and Comparison example 6 that adding an appropriate amount of first electrolyte salt to the electrolyte solution of the lithium-ion battery can reduce the direct current impedance of the lithium-ion battery, to improve power of the lithium-ion battery.

(3.4) Cycle performance: At normal temperature, a charge/discharge voltage range of the battery was kept within 2.5 V to 4.35 V, the battery was cycled for 600 times at current density of 0.5 C, and a capacity retention rate was calculated. A test result is shown in Table 4.

**Table 4 Capacity retention rates of lithium-ion batteries in Example 1 to Example 12 and Comparative example 1 to Comparative example 9**

| Group | R₂ group | Parts by weight of the first electrolyte salt in the electrolyte solution | Parts by weight of the second electrolyte salt in the electrolyte solution | Parts by weight of the fluoroethylene carbonate in the electrolyte solution | Compaction density (g cm⁻³) of the negative electrode active material | Thickness (µm) of the Cu foil | Thickness (µm) of the Al foil | Capacity retention rate |
|---|---|---|---|---|---|---|---|---|
| Example 1 | F | 15 | 5 | 4 | 1.5 | 5 | 10 | 88.7% |
| Example 2 | F | 15 | 5 | 4 | 1.5 | 6 | 10 | 88.6% |
| Example 3 | F | 15 | 5 | 4 | 1.5 | 4 | 10 | 88.5% |
| Example 4 | F | 12 | 5 | 4 | 1.5 | 5 | 10 | 86.5% |
| Example 5 | F | 16 | 5 | 4 | 1.5 | 5 | 10 | 89.4% |
| Example 6 | F | 15 | 5 | 4 | 1.8 | 5 | 10 | 87.9% |
| Example 7 | F | 15 | 8 | 4 | 1.5 | 5 | 10 | 88.4% |
| Example 8 | F | 15 | 10 | 4 | 1.5 | 5 | 10 | 88.9% |
| Example 9 | F | 15 | 5 | 6 | 1.5 | 5 | 10 | 88.9% |
| Example 10 | F | 15 | 5 | 3 | 1.5 | 5 | 10 | 88.5% |
| Example 11 | O | 15 | 5 | 4 | 1.5 | 5 | 10 | 88.4% |
| Example 12 | O | 10 | 5 | 4 | 1.5 | 5 | 10 | 87.6% |
| Comparative example 1 | F | 0 | 5 | 4 | 1.5 | 5 | 10 | 84.5% |
| Comparative example 2 | F | 15 | 0 | 4 | 1.5 | 5 | 10 | 55.0% |
| Comparative example 3 | F | 15 | 5 | 0 | 1.5 | 5 | 10 | 58.6% |
| Comparative example 4 | F | 15 | 5 | 4 | 1.5 | 20 | 10 | 70.5% |
| Comparative example 5 | F | 8 | 5 | 4 | 1.5 | 5 | 10 | 72.5% |
| Comparative example 6 | F | 25 | 5 | 4 | 1.5 | 5 | 10 | 74.1% |
| Comparative example 7 | F | 15 | 5 | 4 | 2.5 | 5 | 10 | 73.3% |
| Comparative example 8 | F | 15 | 35 | 4 | 1.5 | 5 | 10 | 72.3% |
| Comparative example 9 | F | 15 | 5 | 20 | 1.5 | 5 | 10 | 71.6% |

| | | | | | | | | |
|---|---|---|---|---|---|---|---|---|
| Note: The electrolyte solution has 100 parts by weight. | | | | | | | | |

It can be learned with reference to Example 1, Example 9, and Example 10 and Comparative example 2 and Comparative example 9 that adding an appropriate amount of second electrolyte salt to the electrolyte solution of the lithium-ion battery can improve the cycle performance of the lithium-ion battery.

It can be learned with reference to Example 1 to Example 12 and Comparative example 1 to Comparative example 9 that adding appropriate amounts of first electrolyte salt, second electrolyte salt, and fluoroethylene carbonate to the electrolyte solution of the lithium-ion battery can increase a failure temperature and the direct current impedance of the battery, to improve the safety performance and the power of the lithium-ion battery, improve the energy density and the cycle performance, so that the lithium-ion battery can have high safety performance, high power performance, high energy density, and long cycle life.

It should be noted that this application is not limited to the foregoing embodiments. The foregoing embodiments are merely exemplary, and embodiments having substantially the same technical idea and the same effects within the scope of the technical solutions of this application are all included in the technical scope of this application. In addition, without departing from the scope of the subject matter of this application, various modifications that can be conceived by a person skilled in the art are applied to the embodiments, and other modes constructed by combining some of the constituent elements of the embodiments are also included in the scope of this application.

## Claims

1. A battery cell, comprising:
an electrode assembly, wherein the electrode assembly comprises a positive electrode plate and a negative electrode plate; and
an electrolyte solution, wherein the electrolyte solution comprises a first electrolyte salt, and a structural formula of the first electrolyte salt is 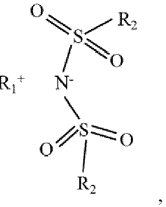
wherein R₁ comprises at least one of Li, Na, K, Mg, and Al, R₂ comprises at least one of element O, element S, element F, and C1-C3 alkyl or C1-C3 alkyl substituted with element F, and based on 100 parts by weight of the electrolyte solution, content W₁ of the first electrolyte salt ranges from 8 parts by weight to 20 parts by weight.

2. The battery cell according to claim 1, wherein the first electrolyte salt is lithium bis(fluorosulfonyl)imide.

3. The battery cell according to claim 1 or 2, wherein based on 100 parts by weight of the electrolyte solution, the content W₁ of the first electrolyte salt ranges from 10 parts by weight to 16 parts by weight.

4. The battery cell according to any one of claims 1 to 3, wherein the negative electrode plate comprises a negative electrode current collector and a negative electrode active material layer coated on at least one side of the negative electrode current collector; and
the content W₁ of the first electrolyte salt and a thickness H₁ of the negative electrode current collector satisfy: 1 g·µm⁻¹≤W₁/H₁≤10 g µm⁻¹, and optionally satisfy: 1.4 g µm⁻¹≤ W₁/H₁≤5.4 g µm⁻¹.

5. The battery cell according to claim 4, wherein compaction density P of the negative electrode active material and the content W₁ of the first electrolyte salt satisfy: 0.05 g² cm⁻³≤P/W₁≤0.5 g² cm⁻³, and optionally satisfy: 0.08 g² cm⁻³≤P/W₁≤0.17 g² cm⁻³.

6. The battery cell according to claim 4 or 5, wherein the thickness H₁ of the negative electrode current collector ranges from 2 µm to 10 µm, and optionally ranges from 3 µm to 7 µm.

7. The battery cell according to any one of claims 4 to 6, wherein the compaction density P of the negative electrode active material ranges from 1 g cm⁻³ to 2 g cm⁻³, and optionally ranges from 1.4 g cm⁻³ to 1.7 g cm⁻³.

8. The battery cell according to any one of claims 1 to 7, wherein the electrolyte solution further comprises a second electrolyte salt, and the second electrolyte salt is lithium hexafluorophosphate.

9. The battery cell according to claim 8, wherein based on 100 parts by weight of the electrolyte solution, content W₂ of the second electrolyte salt ranges from 1 part by weight to 15 parts by weight, and optionally ranges from 2 parts by weight to 10 parts by weight.

10. The battery cell according to any one of claims 1 to 9, wherein the positive electrode plate comprises a positive electrode current collector and a positive electrode active material layer coated on at least one side of the positive electrode current collector; and
the content W₁ of the first electrolyte salt, the content W₂ of the second electrolyte, and a thickness H₂ of the positive electrode current collector satisfy: 0.05 µm⁻¹≤W₁/(W₂×H₂)≤1 µm⁻¹, and optionally satisfy: 0.07 µm⁻¹≤W₁/(W₂×H₂)≤0.6 µm⁻¹.

11. The battery cell according to claim 10, wherein the thickness H₂ of the positive electrode current collector ranges from 5 µm to 20 µm, and optionally ranges from 8 µm to 15 µm.

12. The battery cell according to any one of claims 1 to 11, wherein the electrolyte solution further comprises fluoroethylene carbonate.

13. The battery cell according to claim 12, wherein content W₃ of the fluoroethylene carbonate and the content W₁ of the first electrolyte salt satisfy: 0.1≤W₃/W₁≤0.5, and optionally satisfy: 0.12≤W₃/W₁≤0.3.

14. The battery cell according to claim 12 or 13, wherein based on 100 parts by weight of the electrolyte solution, the content W₃ of the fluoroethylene carbonate ranges from 2 parts by weight to 10 parts by weight, and optionally ranges from 2 parts by weight to 5 parts by weight.

15. The battery cell according to any one of claims 2 to 14, wherein the positive electrode active material comprises a lithium transition metal composite oxide, and the lithium transition metal composite oxide comprises at least one of a lithium cobalt oxide, a lithium nickel oxide, a lithium manganese oxide, a lithium nickel manganese oxide, and a lithium nickel cobalt aluminum oxide.

16. The battery cell according to any one of claims 4 to 15, wherein the negative electrode active material comprises at least one of hard carbon, graphite, and a carbon fiber, and optionally is graphite.

17. A battery, comprising the battery cell according to any one of claims 1 to 16.

18. A power consuming apparatus, comprising the battery according to claim 17.
